# EUROPÄISCHE PATENTSCHRIFT

(11) **EP 3 664 236 B1**
(45) Veröffentlichungstag und Bekanntmachung des Hinweises auf die Patenterteilung: **08.09.2021**
(21) Anmeldenummer: 18211197.1
(22) Anmeldetag: 08.12.2018
(51) Int. Cl.: H02G 3/00, F16B 5/02, F16B 7/18, F16L 3/26, F16B 21/09

(54) **AUSLEGER UND MONTAGEVORRICHTUNG MIT EINEM AUSLEGER**
BRAKET AND SUPPORT SYSTEM WITH A BRAKET
CONSOLE ET SYSTÈME DE SUPPORTAGE DOTÉ D'UNE CONSOLE

(43) Veröffentlichungstag der Anmeldung: 10.06.2020
(73) Patentinhaber: Zurecon AG, 9053 Teufen AR (CH)
(72) Erfinder: PFLUGER, Gerd, 4625 Oberbuchsiten (CH)
(74) Vertreter: Rutz & Partner

(56) Entgegenhaltungen:
- EP-A1- 0 813 280
- EP-A1- 2 290 772
- WO-A1-93/04612
- US-A- 874 014
- US-A1- 2011 284 701

## Beschreibung

Die Erfindung betrifft einen zur Montage an einer Stütze vorgesehenen Ausleger sowie eine Montagevorrichtung mit einem solchen Ausleger.

Gattungsgemässe Ausleger werden in der Installationstechnik verwendet und dienen dem Tragen von Lasten, wie Kabelkanälen mit elektrischen Leitungen, Wasserrohren, oder Stromschienen. Die Montagevorrichtungen umfassen eine Stütze, insbesondere eine Deckenstütze, an der einseitig oder auf einander gegenüberliegenden Seiten wenigstens ein Ausleger montiert wird.
[1], EP1155638A1, offenbart einen gattungsgemässen Ausleger, der lösbar an einer Deckenstütze montierbar ist, die dazu mit Montageöffnungen versehen ist. Der Ausleger besteht aus einem der Aufnahme der Last dienenden Tragarm und einem damit verbundenen Kopfteil, das ebenfalls eine Montageöffnung aufweist. Die Montage des Auslegers erfolgt anhand von Verbindungselementen, wie Schrauben oder Haken, die in die Montageöffnungen eingeführt werden. Der Ausleger kann daher an der Deckenstütze in wählbarer Höhe sowie, je nach dem Profil der Deckenstütze (z.B. Vierkant-Hohlprofil oder sogenanntes C-Profil), in eine wählbare Richtung weisend, montiert werden. Nachteilig bei diesem Ausleger ist, dass dessen Herstellung einen erheblichen Aufwand verursacht. Der Tragarm wird nämlich an das zugehörige Montageteil angeschweisst, was nicht nur mit einem hohen Aufwand verbunden ist, sondern auch verschiedene weitere Nachteile nach sich zieht.
   Einerseits ist zu beachten, dass die Ausleger oft hohe Lasten tragen und daher starken mechanischen Belastungen ausgesetzt sind. Mangelhafte Schweissstellen können dabei bereits kurz nach der Installation des Auslegers aufreissen, wonach die Last nicht mehr gehalten ist.
   Nachteilig sind ferner Materialschäden, die durch das Schweissen hervorgerufen werden und die eine aufwändige Nachbehandlung erfordern. Bei der Verwendung von verzinktem Metall wird durch das Schweissen nämlich die Schutzschicht aus Zink in einem weiten Bereich zerstört, weshalb eine teure Nachbehandlung erforderlich ist. Konstruktionsteile, die z.B. nach dem Sendzimir-Verfahren bearbeitet wurden, weisen nach dem Schweissen oft in Zonen, in denen die Last einwirkt, Mängel auf. Sofern diese Mängel nicht behoben werden, ist nach einer relativ kurzen Betriebsdauer mit Oxidationsschäden zu rechnen, welche die Tragfähigkeit der Ausleger beeinträchtigen.
[2], EP2290772A1, offenbart einen Ausleger mit einem U-Profil-förmigen Tragarm, der ein Mittelstück und beidseits senkrecht dazu geneigte Seitenstücke aufweist und der mit einem Kopfteil verbunden ist, das ein an einer vertikal ausgerichteten Stütze montierbares Mittelteil und damit verbundene Seitenteile mit Fusselementen aufweist, die sich über einen Teil der Länge des Tragarms erstrecken und an der Unterseite des Mittelstücks und am zugehörigen Seitenstück des Tragarms anliegen. Dieser Ausleger ist nur mit einem relativ grossen Aufwand herstellbar, da ein mehrfach gebogenes Kopfteil bereitzustellen und mit dem Tragarm zu verbinden ist. Ferner sind zahlreiche Verbindungsstellen erforderlich, die sich nach längerem Gebrauch des Auslegers als Schwachstellen erweisen können.

Die EP0813280A1 offenbart Ausleger, die aus einem einzigen Blechzuschnitt durch Umformen hergestellt sind. Der Ausleger umfasst einen Tragarm und ein Kopfstück, welches durch Umformen von Endstücken des Tragarms gebildet wird.

Die US2011284701A1 offenbart einen Ausleger mit einem Kopfstück, welches Schlüssellochöffnungen aufweist.

Die EP2290772A1 offenbart einen Ausleger mit einem Tragarm und einem Kopfstück, die bei der Fertigung miteinander verbunden werden.

WO9304612A1 offenbart einen Ausleger mit einem Kopfstück, welches den Tragarm nach unten überragt.

Die JPS5533373U offenbart eine Montagevorrichtung mit einem Montageprofil, welches mit Schlüssellochöffnungen versehen ist, in die Köpfe von Schrauben, die mit einem Tragprofil verbunden sind, eingeführt werden können, um das Montageprofil mit dem Tragprofil zu verbinden.

Der vorliegenden Erfindung liegt daher die Aufgabe zugrunde, einen verbesserten Ausleger sowie eine verbesserte

Montagevorrichtung, die einen solchen Ausleger aufweist, zu schaffen.

Der Ausleger soll möglichst einfach ausgestaltet sein und mit reduziertem Arbeitsaufwand in hoher Qualität hergestellt werden können. Der Ausleger soll eine hohe Belastbarkeit aufweisen, die bei der Herstellung des Auslegers zudem mit einfachen Massnahmen entsprechend den Bedürfnissen des Anwenders wählbar ist.

Zur Fertigung der Ausleger sollen kostengünstige und einfach bearbeitete Materialien eingesetzt werden können, ohne dass diese während des Fertigungsprozesses beeinträchtigt werden und der gefertigte Ausleger eine Nachbehandlung, z.B. in einem Zinkbad, erfordert.

Der erfindungsgemässe Ausleger soll einfach montierbar sein, sodass eine erfindungsgemässe Montagevorrichtung z.B. auch auf einer Leiter stehend bequem aufgebaut werden kann. In bevorzugten Ausgestaltungen soll sichergestellt werden, dass die eingesetzten Verbindungsmittel keinen hohen Belastungen ausgesetzt sind und somit auch langfristig keine Schäden aufweisen.

Diese Aufgabe wird mit einem Ausleger und einer Montagevorrichtung gelöst, welcher die in Anspruch 1 bzw. 10 angegebenen Merkmale aufweist. Vorteilhafte Ausgestaltungen der Erfindung sind in weiteren Ansprüchen angegeben.

Der Ausleger umfasst einen U-Profil-förmigen Tragarm, der ein erstes und ein zweites Seitenstück aufweist, die durch ein Mittelstück einstückig miteinander verbunden sind, und der an einem Ende mit einem Kopfteil verbunden ist, das durch ein Verbindungsmittel mit einer Stütze verbindbar ist. Erfindungsgemäss umfasst das Kopfteil gegeneinander abgewinkelte und einander überlappende Endstücke der beiden Seitenstücke sowie eine Montageplatte, die durch wenigstens ein Verbindungselement mit den beiden Endstücken der beiden Seitenstücke verbunden ist und die eine vorzugsweise an der Oberseite des Tragarms angeordnete Montageöffnung aufweist, die der Aufnahme des Verbindungsmittels dient.

Zur Bildung einer erfindungsgemässen Montagevorrichtung, wird der Ausleger mit der Stütze, vorzugsweise einer an einer Decke montierten Deckenstütze, verbunden.

Zur Fertigung des Tragarms kann kostengünstiges verzinktes Blech, z.B. Sendzimir-verzinktes Blech, verwendet werden, welches gegen Oxidation geschützt ist. Geringe Verletzungen der Zinkschicht, die beim Biegen und beim Verbinden mit der Montageplatte resultieren, werden automatisch geheilt, da die Zinkschicht wieder über die verletzten Materialstellen fliesst. Die Erfindung erlaubt es daher, den Tragarm aus verzinktem Material zu fertigen, ohne dass nach der Verbindung mit der Montageplatte eine Nachbehandlung erforderlich ist.

Die Montageplatte kann aus demselben Material wie der Tragarm oder bevorzugt aus einem hitzebeständigeren Material und/oder mit grösserer Dicke gefertigt werden, sodass das Kopfteil des Auslegers eine grössere thermische Festigkeit und/oder mechanische Festigkeit aufweist. Durch entsprechende Wahl der einfach ausgestalteten und gegebenenfalls mit einer Schutzschicht versehenen Montageplatte können die Eigenschaften des Auslegers wesentlich beeinflusst werden. Eine entsprechend ausgestaltete thermisch, mechanisch und chemisch stabile Montageplatte kann besonders kostengünstig hergestellt werden, sodass die Gesamtkosten des Auslegers trotz deutlich verbesserter Eigenschaften relativ gering sind. Durch Auswahl hochwertiger Materialien und entsprechende Dimensionierung erhöhen sich normalerweise die Materialkosten geringfügig. Durch Reduktion des Aufwands zur Fertigung und der Vermeidung einer Nachbehandlung resultieren jedoch erhebliche Kosteneinsparungen, welche die etwas höheren Materialkosten mehr als kompensieren. In der Gesamtrechnung kann der verbesserte erfindungsgemässe Ausleger somit mit reduzierten Kosten gefertigt werden.

Besonders vorteilhaft ist, dass keine speziellen Arbeitsgänge für eine zusätzliche Verzinkung erfindungsgemäss gefertigter Ausleger erforderlich sind. Insbesondere entfallen Transporte zu externen Verzinkereien, in denen Produkte mit hohem Aufwand einzelstückweise verzinkt werden. Anstelle der Durchführung einer Sonderbehandlung, wird Material verwendet, welches in hohen Mengen kostengünstig eingekauft und mit relativ geringen Kosten verarbeitet wird, um die Ausleger zu fertigen. Die Kostenreduktion durch die Verwendung von verzinktem Rohmaterial, z.B. Sendzimir-verzinktem Blech, im Vergleich zur individuellen Verzinkung der gefertigten Ausleger ist erheblich. Zu beachten ist ferner die Reduktion der Lagerkosten sowie der Lieferzeiten. Nach Eingang einer Bestellung können die bestellten Ausleger sofort fertig gestellt und ausgeliefert werden. Konventionelle Ausleger müssen hingegen vorgefertigt, in externen Betrieben verzinkt und in genügend hoher Anzahl gelagert werden, damit kein Lieferverzug auftritt.

Weiterhin ist vorgesehen, dass die einander überlappenden Endstücke der beiden Seitenstücke zwischen der Montageplatte und einer Konterplatte gehalten sind. Auf diese Weise resultiert mit einem einfachen Schichtaufbau und einfachen Fertigungsschritten ein stabiles Kopfteil. Durch diesen Schichtaufbau kann nicht nur das Kopfteil verstärkt ausgebildet, sondern zusätzlich der Tragarm gestützt werden. Dazu wird die innerhalb des U-Profils des Tragarms angeordnete Konterplatte vorzugsweise L-förmig ausgebildet und mit einem Kopfelement parallel zum Tragarm ausgerichtet. Nach der festen Verbindung der Konterplatte mit dem Kopfteil des Auslegers wird der Tragarm durch die Konterplatte bzw. durch das Kopfelement zusätzlich gestützt.

Durch wahlweise Dimensionierung der Montageplatte und der Konterplatte kann der Ausleger, insbesondere auch der Tragarm, mit einer gewünschten Festigkeit und Stabilität versehen werden. Es resultiert somit ein modularer Aufbau, welcher dem Hersteller erlaubt, Ausleger mit beliebigen Eigenschaften wahlweise und mit geringem Aufwand herzustellen.

Die Konterplatte wird innerhalb des Tragarms vorzugsweise verschiebbar gelagert. Dazu kann die Konterplatte beidseits mit Ausnehmungen versehen werden, in die Führungsrillen eingreifen, die in die Seitenstücke des Tragarms eingeprägt sind. Sofern vorhanden, kann das gegebenenfalls verbreiterte Kopfteil vorteilhaft auf den Führungsrillen verschiebbar gelagert sein.

Die Konterplatte wird vorzugsweise, wie die Montageplatte, ebenfalls aus Metall gefertigt, das thermisch und mechanisch widerstandsfähiger ist als das Material des Tragarms. Vorzugsweise ist die Konterplatte ebenfalls mit einer Schutzschicht, gegebenenfalls einer Zinkschicht versehen. Vorzugsweise sind Gewindebohrungen in der Konterplatte vorgesehen, sodass die Verbindungsschrauben von aussen durch die Montageplatte hindurch in die Konterplatte eingedreht werden können. Vorzugsweise werden die Montageschrauben vollständig in die Montageplatte eingesenkt. Z.B. werden Schrauben, insbesondere Senkkopfschrauben verwendet, die in Ausnehmungen innerhalb der Montageplatte eingedreht werden.

Die Endstücke der beiden Seitenstücke des Tragarms und die Montageplatte und die Konterplatte sind durch wenigstens eine mechanische Verbindung, wie eine Tox-Verbindung, eine Schraubenverbindung oder eine Nietverbindung, miteinander verbunden. In einer vorzugsweisen Ausgestaltung werden die Endstücke der beiden Seitenstücke durch wenigstens eine Tox-Verbindung miteinander verbunden, bevor die Montageplatte und/oder die Konterplatte montiert werden. Anschliessend werden die Montageplatte und die Konterplatte durch Schrauben miteinander verbunden, die durch Bohrungen in den Endstücken der beiden Seitenstücke hindurch geführt und in Gewindebohrungen eingedreht werden, die in der Montageplatte und/oder der Konterplatte vorgesehen sind.

In vorzugsweisen Ausgestaltungen überragt die Montageplatte den Tragarm mit einem Montageteil nach oben oder nach unten, vorzugsweise nach unten und nach oben. Zur Erhöhung der Festigkeit des Kopfteils des Auslegers ist vorzugsweise vorgesehen, dass wenigstens eines der Endstücke der beiden Seitenstücke die Montageplatte nach oben oder nach unten oder nach unten und nach oben teilweise oder vollständig überlappt. In jeder dieser Ausgestaltungen ist das stabile Kopfteil schlank ausgebildet und nimmt nur wenig Raum in Anspruch.

Das Montageteil oder die Montageteile der Montageplatte sind vorzugsweise fest mit dem zugeordneten Verbindungsmittel verbunden, sodass das Verbindungsmittel während der Installation am Ausleger nicht mehr montiert, sondern nur noch in die Stütze, z.B. die Deckenstütze, eingehängt und festgezogen werden. In bevorzugten Ausgestaltungen ist die Stütze dazu mit Schlüssellochöffnungen versehen, in die ein Teil des Verbindungsmittels eingehängt wird. Dieses Teil wird durch die Kreisöffnung der Schlüssellochöffnung eingeführt und anschliessend nach unten in Schlitzöffnung der Schlüssellochöffnung verschoben, in der es formschlüssig gehalten ist. Das Verbindungsmittel ist beispielsweise eine Schraubengarnitur mit einer Schraube und einer Schraubenmutter, die miteinander verbunden an der Montageplatte montiert sind. Der Schraubenkopf oder die Schraubenmutter wird durch die Kreisöffnung der Schlüssellochöffnung hindurch geführt, wonach der Schraubenschaft nach unten in die Schlitzöffnung der Schlüssellochöffnung verschoben wird. Der Schraubenkopf oder die Schraubenmutter ist in der Folge hinter in der Schlüssellochöffnung formschlüssig gehalten. Vorzugsweise ist ein elastisches Element, wie eine federelastische Unterlagscheibe, vorgesehen, welches nach dem Einsetzen der Schraubenmutter in die Schlüssellochöffnung an der Schraubenmutter anliegt und diese fixiert, sodass die Schraube festgezogen werden kann. Angrenzend an die Schlüssellochöffnung kann vorteilhaft auch ein Kragen vorgesehen sein, welcher die eingesetzte Schraubenmutter oder den eingesetzten Schraubenkopf formschlüssig hält.

In einer bevorzugten Ausgestaltung ist vorgesehen, dass die Endstücke der Seitenstücke des Tragarms und die Montageplatte zueinander korrespondierende Formteile aufweisen, die formschlüssig ineinander eingreifen, sodass die Endstücke und die Montageplatte senkrecht zur Achse des Tragarms gegeneinander unverschiebbar gehalten sind. Zusätzlich oder alternativ wird vorgesehen, dass die Endstücke der Seitenstücke und die Konterplatte zueinander korrespondierende Formteile aufweisen, die formschlüssig ineinander eingreifen, sodass die Endstücke und die Konterplatte senkrecht zur Achse des Tragarms gegeneinander unverschiebbar gehalten sind. Die formschlüssig miteinander verbundenen Teile des Kopfteils bilden daher eine Einheit, die dem Kopfteil des Auslegers hinsichtlich der vorliegenden Dimensionierung dieser Teile die maximal mögliche Festigkeit verleiht.

In einer weiteren vorzugsweisen Ausgestaltung ist vorgesehen, dass die Montageplatte auf der vom Tragarm abgewandten bzw. der Stütze zugewandten Seite mit Formteilen, wie Verzahnungen, versehen ist, die für den Eingriff von Formteilen der Stütze vorgesehen sind. Durch die ineinander eingreifenden Formteile der Montageplatte und der Stütze sind diese daher formschlüssig derart miteinander verbunden, dass der Ausleger senkrecht zur Deckenstütze unverschiebbar gehalten ist. Die auf den Ausleger einwirkende Kraft wird daher zu einem wesentlichen Teil über die formschlüssige Verbindung auf die Stütze bzw. Deckenstütze übertragen. Durch das Verbindungsmittel, z.B. die Schraubengarnitur sind daher nur noch relativ geringe Zugkräfte, aber keine kritischen Scherkräfte aufzunehmen. Der Ausleger und das oder die Verbindungsmittel können daher vorteilhaft dimensioniert werden.

Nachfolgend wird die Erfindung anhand von Zeichnungen näher erläutert. Dabei zeigt:
- Fig. 1: eine erfindungsgemässe Montagevorrichtung 100 mit einer z.B. an einer Decke montierten Stütze 2 und einem daran montierten Ausleger 1, der ein mit der Stütze 2 verbundenes Kopfteil 12 und einen damit verbundenen Tragarm 11 aufweist, auf dem eine Kabelbahn 3 angeordnet ist;
- Fig. 2: den Tragarm 11 von Fig. 1 mit einem Mittelstück 13, das beidseits einstückig mit Seitenstücken 111, 112 versehen ist, die gegeneinander gebogene Endstücke 1111, 1112 aufweisen, die Bestandteil des Kopfteils 12 des Auslegers von Fig. 1 sind;
- Fig. 3: den Ausleger 1 von Fig. 1 mit dem Tragarm 11, der entlang der in Fig. 5 eingezeichneten Linie A--A geschnitten ist, und mit dem Kopfteil 12, das in Explosionsdarstellung gezeigt ist;
- Fig. 4: die vorzugsweise ausgestaltete Montagevorrichtung 100 von Fig. 1 in Explosionsdarstellung mit dem Ausleger 1, der ein Kopfteil 12 mit einer Montageplatte 14 aufweist, die einerseits formschlüssig mit den Endstücken 1111, 1112 der Seitenstücke 111, 112 des Tragarms 11 (entlang der in Fig. 5 eingezeichneten Linie A--A geschnitten) sowie einer Konterplatte 15 und andererseits formschlüssig mit der Stütze 2 verbindbar ist;
- Fig. 5: die Montage eines Auslegers 1 gemäss Fig. 1, dessen Kopfteil 12 mit einem vormontierten Verbindungsmittel 9 bzw. einer Schraubengarnitur 91, 92, 93 verbunden ist, die in eine Schlüssellochöffnung 20 der Stütze 2 eingehängt und festgezogen wird;
- Fig. 6: Ausleger 1 in einer vorzugsweisen Ausgestaltung mit einer Montageplatte 12, die den Tragarm 11 nach unten und nach oben mit einem Montageteil überragt, das je mit einem Verbindungsmittel 9 bzw. einer Schraubengarnitur 91, 93 verbunden ist, die in Schlüssellochöffnungen 20 der Stütze 2 eingehängt und festgezogen werden;
- Fig. 7a: das Verbindungsmittel 9 von Fig. 1 mit einer Schraube 91, einer federelastischen Unterlagscheibe 92 und einer Schraubenmutter 93;
- Fig. 7b: die Schraubengarnitur 9 von Fig. 7a in Explosionsdarstellung;
- Fig. 7c: die Montageplatte 14 des Auslegers 1 von Fig. 1 mit der vormontierten Schraubengarnitur 9, die in eine der Schlüssellochöffnungen 20 der Stütze 2 eingeführt wurde; und
- Fig. 8: eine Ausleger 1 in einer vorzugsweisen Ausgestaltung.

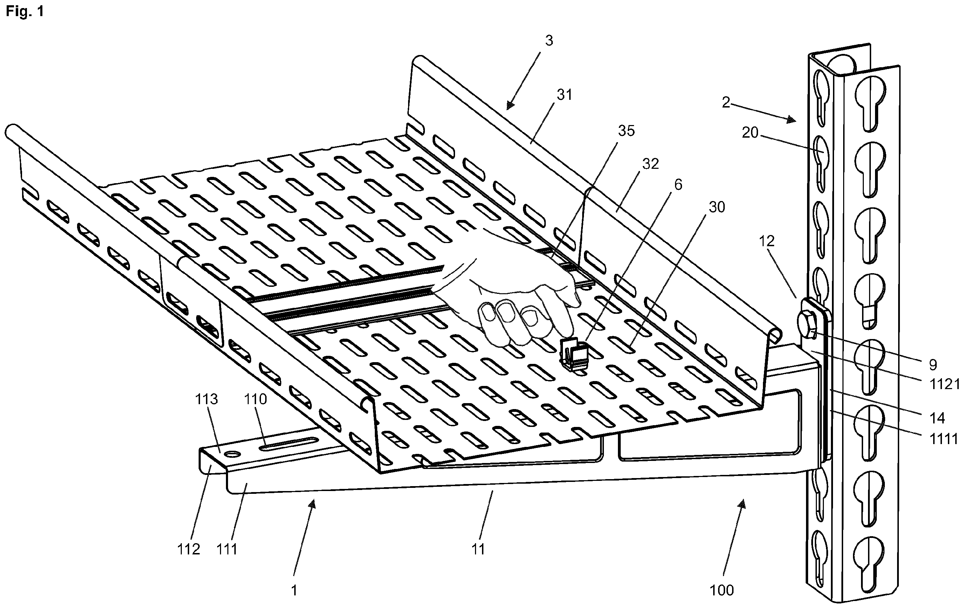

Fig. 1 zeigt eine erfindungsgemässe Montagevorrichtung 100 mit einer z.B. an einer Decke montierten Stütze 2 und einem daran montierten Ausleger 1. Der Ausleger 1 umfasst ein mit der Stütze 2 verbundenes Kopfteil 12 und einen damit verbundenen Tragarm 11, auf dem eine Kabelbahn 3 angeordnet ist, von der zwei miteinander verbundene Kabelbahnsegmente 31, 32 gezeigt sind, die stirnseitig mit Pufferelementen 35 aneinander anstossen. Die Kabelbahnsegmente 31, 32 weisen Seitenwände und eine Kabelbahnboden auf, der auf dem Ausleger 1 ruht und der mit Öffnungen 30 versehen ist.

Der Ausleger 1 umfasst einen U-Profil-förmigen Tragarm 11, der ein erstes und ein zweites Seitenstück 111, 112 aufweist, die parallel zueinander ausgerichtet und durch ein Mittelstück 113 einstückig miteinander verbunden sind. An dem der Stütze 2 zugewandten Endstück ist der Tragarm 11 mit dem Kopfteil 12 versehen, das gegeneinander gefaltete Endstücke 1111, 1121 der Seitenstücke 111, 112 des Tragarms 11 und eine Montageplatte 14 umfasst, die miteinander verbunden sind. Die Montageplatte 14 ist zudem durch ein Verbindungsmittel 9 mit der Stütze 2 verbunden.

Die Stütze 2 weist Schlüssellochöffnungen 20 auf, in die das Verbindungsmittel 9 eingehängt und festgezogen werden kann. In einer vorzugsweisen Ausgestaltung umfasst der Ausleger 1 daher das vormontierte Verbindungsmittel 9, so dass der Ausleger 1 mit nur einem Handgriff montiert werden kann. Nach dem Einhängen des Auslegers 1 wird dieser von der Stütze bzw. Deckenstütze 2 gehalten. Der Monteur hat nun beide Hände frei und kann das Verbindungsmittel 9, z.B. eine Schraubengarnitur, festziehen oder fixieren.

Nachstehend wird beschrieben, dass das Kopfteil 12 des Auslegers eine hohe Festigkeit aufweist und trotz des einfachen Aufbaus stark belastbar ist. Fig. 1 zeigt, dass das Kopfteil 12 trotz der hohen Belastbarkeit schlank aufgebaut ist und praktisch keinen Raum in Anspruch nimmt. Der gesamte Tragarm 11 steht somit zur Ablage einer Last z.B. des Kabelkanals 3 zur Verfügung.

Fig. 1 zeigt ferner, dass das Mittelstück 113 des Tragarms 11 mit Öffnungen, vorzugsweise Längsöffnungen 110 versehen ist. Stellenweise liegen diese Auslegeröffnungen 110 unterhalb der Bodenöffnungen 30 des Kabelkanals 3, sodass zur Fixierung des Kabelkanals 3 Clipelemente 6 durch die Auslegeröffnungen 110 und die Bodenöffnungen 30 hindurch gestossen werden können.

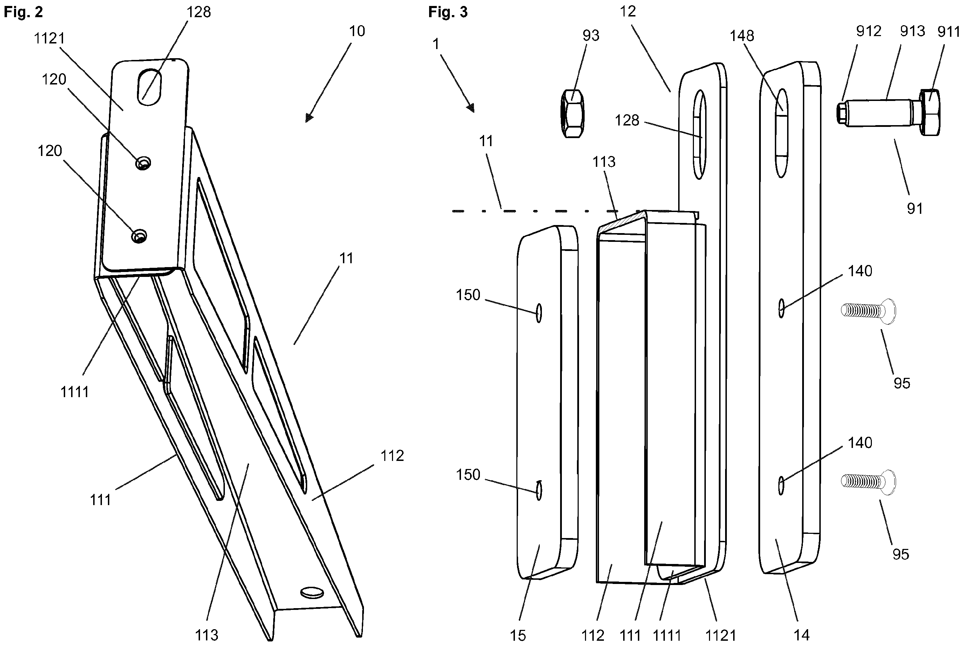

Fig. 2 zeigt den Tragarm 11 mit dem Mittelstück 113 und den Seitenstücken 111, 112 mit den gegeneinander gebogenen Endstücken 1111, 1121, die Öffnungen 120 zur Durchführung von Verbindungsschrauben 95 aufweisen (siehe Fig. 3).

Das Endstück 1121 des Seitenstücks 112 überragt den Tragarm 11 nach oben und weist eine Montageöffnung 128 auf. Der Tragarm 11 mit den Endstücken 1111, 1121 kann aus einem einzigen Blechstück 10 ausgeschnitten und geformt werden. Wie beschrieben wurde, wird vorzugsweise beschichtetes Blech, z.B. Sendzimir verzinktes Blech verwendet, das gegen Korrosion geschützt ist und das nach der erfindungsgemässen Fertigung des Auslegers 1 nicht wieder behandelt werden muss.

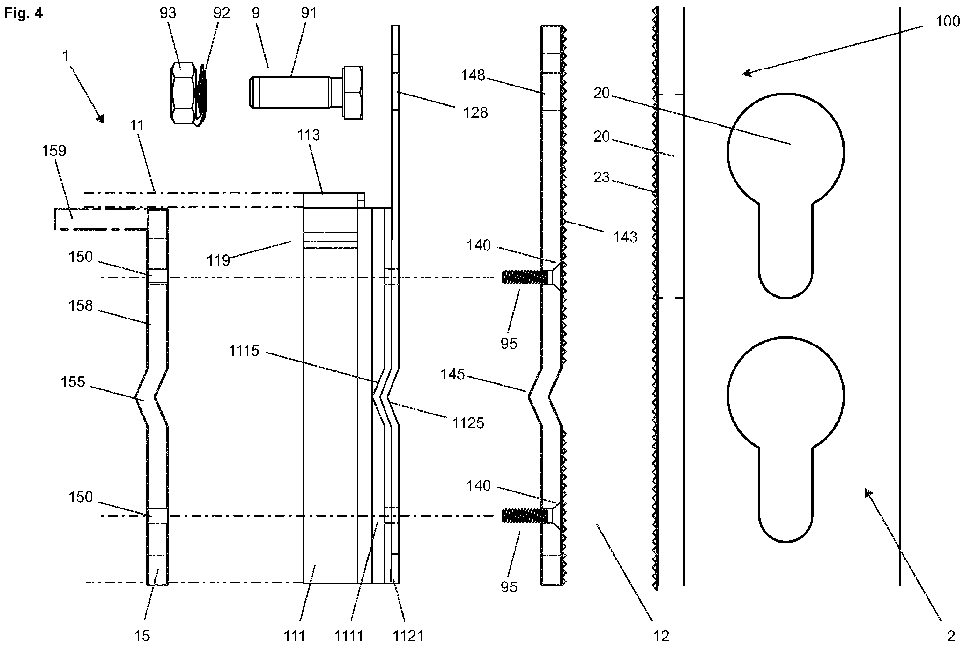

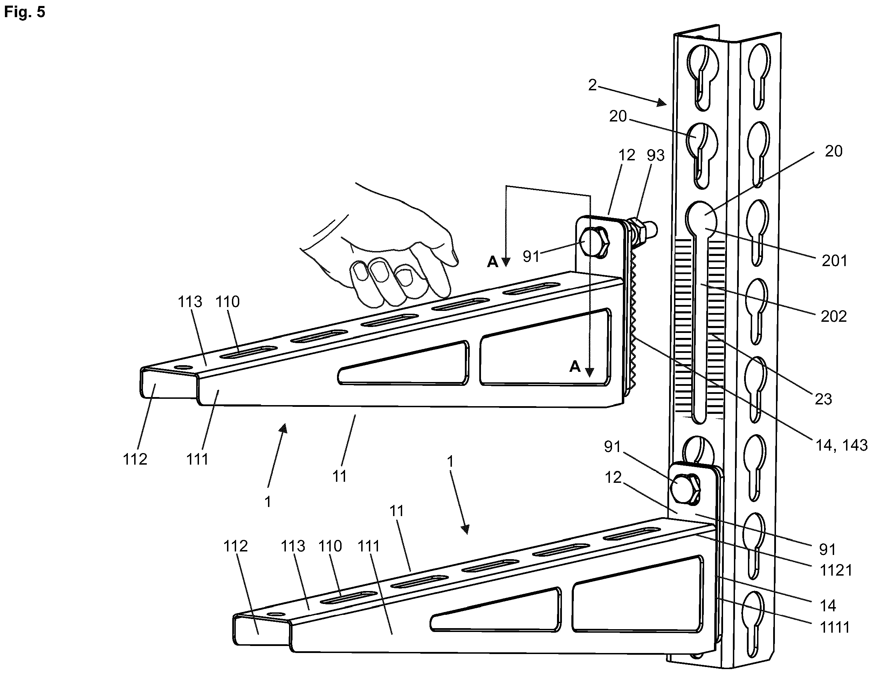

Fig. 3 zeigt den Ausleger 1 von Fig. 1 in einer vorzugsweisen Ausgestaltung mit dem Tragarm 11 von Fig. 2, der entlang der in Fig. 5 eingezeichneten Linie A--A geschnitten ist, und mit dem Kopfteil 12, das in Explosionsdarstellung gezeigt ist. In dieser Ausgestaltung ist der Ausleger 1 nicht nur mit der Montageplatte 14, sondern auch mit einer Konterplatte 15 versehen, die Gewindebohrungen 150 aufweist. Die Konterplatte 15 ist innerhalb des U-Profils des Tragarms 11 angeordnet und vorzugsweise verschiebbar gehalten. Die Endstücke 1111, 1121 des Tragarms 11 sind zwischen der Montageplatte 14 und der Konterplatte 15 angeordnet und werden beim Festziehen der Verbindungsschrauben 95 fixiert. Der Schaft der Verbindungsschrauben 95 wird durch Bohrungen 140 in der Montageplatte 14 und durch die Bohrungen oder Öffnungen 120 in den Endstücken 1111, 1121 des Tragarms 11 hindurch und in Gewindebohrungen 150 in der Konterplatte eingeführt. Durch Festziehen der Verbindungsschrauben 95 wird das Kopfteil 12 des Auslegers 1 fixiert. Es ist gezeigt, dass die Verbindungsschrauben 95 Senkkopfschrauben sind, die vollständig in die Montageplatte 14 eingesenkt werden (siehe Fig. 4).

Fig. 3 zeigt ferner das Verbindungsmittel 9 bzw. eine Montageschraube 91, die durch die Öffnung 128 im Endstück 1121 des Seitenstücks 112 und durch eine Öffnung 148 in der Montageplatte 14 hindurch geführt und mit einer Schraubenmutter 93 verbunden wird. Die Schraube 91 weist einen Schraubenkopf 911 und einen Schraubenschaft 912 auf. Der Schraubenschaft 912 weist in dieser vorzugsweisen Ausgestaltung ein Mehrkantelement 9121, 9121' auf, welches z.B. in der Form einer Schraubenmutter in den Schraubenschaft 912 integriert oder frontseitig daran angeformt ist und eine etwas geringeren Aussendurchmesser als der Schraubenschaft 912 aufweist.

Der Schraubenkopf 911 kann in eine der Schlüssellochöffnungen 20 der Stütze 2 eingehängt werden, wonach die Montageschraube 91 festgezogen und das Kopfteil 12 des Anlegers 1 mit der Stütze 2 fest verbunden wird. Der vorzugsweise mit dem Mehrkantelement 9121, 9121' versehene Schraubenschaft 912 kann in einfacher Weise manuell oder mittels eines ersten Schraubenschlüssels gehalten werden, wonach die Schraubenmutter 93 mittels eines zweiten Schraubenschlüssels festgezogen wird. Vorzugsweise ist jeweils der Schraubenkopf 911 und nicht die Schraubenmutter 93 gegen die Stütze 2 gerichtet. Es ist jedoch auch möglich, die Schraubenmutter 93 gegen die Stütze 2 zu richten und in eine der Schlüssellochöffnungen 20 einzuhängen.

Fig. 4 zeigt die vorzugsweise ausgestaltete Montagevorrichtung 100 von Fig. 1 in Explosionsdarstellung mit dem Ausleger 1, dessen Tragarm 11 wiederum entlang der in Fig. 5 eingezeichneten Schnittlinie A--A geschnitten ist. Der Ausleger 1 von Fig. 3 und der Ausleger von Fig. 4 unterscheiden sich durch die Ausgestaltung des Kopfteils 12, das in Fig. 4 eine Montageplatte 14 aufweist, die einerseits formschlüssig mit den Endstücken 1111, 1112 der Seitenstücke 111, 112 des Tragarms 11 sowie der Konterplatte 15 und andererseits formschlüssig mit der Stütze 2 verbindbar ist.

Die Montageplatte 14, die Endstücke 1111, 1121 des Tragarms 11 und die Konterplatte 15 weisen zueinander korrespondierende Formteile 145, 1115 und 155 auf, die beim Festziehen der Verbindungsschrauben 95 formschlüssig ineinander eingesenkt werden. Die Montageplatte 14, die Endstücke 1111, 1121 des Tragarms 11 und die Konterplatte 15 werden daher formschlüssig miteinander verbunden, sodass sie parallel zueinander nicht mehr verschiebbar sind, weshalb keine Scherkräfte auf die Verbindungsschrauben 95 einwirken können.

Die Montageplatte 14 und die Stütze 2 weisen auf den einander zugewandten Seiten ebenfalls zueinander korrespondierende Formteile 143, 23 auf, die ineinander eingreifen, sobald die Montageplatte 14 gegen die Stütze 2 geführt wird. Durch das Verbindungsmittel 9 bzw. die Schraubengarnitur 91, 92, 93 wird das Kopfteil 12 des Auslegers 1 daher gegen die Stütze 2 gezogen, wonach vertikal auf den Ausleger 1 einwirkende Kräfte über die formschlüssige Verbindung und nicht über das Verbindungsmittel 9 auf die Stütze 2 übertragen werden. Das Verbindungsmittel 9 ist daher geringeren Kräften ausgesetzt und wird im Wesentlichen nur noch auf Zug belastet. Scherkräfte, welche die Montageschraube 91 belasten, werden vermieden.

Fig. 5 zeigt die Montage eines Auslegers 1, dessen Kopfteil 12 mit einem vormontierten Verbindungsmittel 9 bzw. einer Schraubengarnitur 91, 92, 93 verbunden ist, an einer vorzugsweise ausgestaltete Stütze 2. Der Ausleger 1 wird mit einem Handgriff gegen die Stütze 2 geführt, bis die Schraubenmutter 93 in eine der Schlüssellochöffnungen 20 der Stütze 2 eingehängt ist. Anschliessend kann die Montageschraube 91 mit einem Werkzeug bequem festgezogen werden. Sofern das Verbindungsmittel 9 um 180° gedreht ist, wird der Schraubenkopf 911 eingehängt.

Die Schlüssellochöffnungen 20 weisen eine Kreisöffnung 201 und eine nach unten daran anschliessende Schlitzöffnung 202 auf. In einer ersten Ausgestaltung der Schlüssellochöffnungen 20 werden die Ausleger 1 mit dem Schaft der Montageschraube 91 normalerweise nach unten bis zum Ende der Schlitzöffnung 202 geführt. In der in Fig. 5 gezeigten Ausgestaltung ist die Schlitzöffnung 202 jedoch lang gezogen und die daran angrenzenden Teile der Stütze 2 bilden Flanschelemente, die mit Formelementen 23 versehen sind, die zu Formelementen 143 der Montageplatte 14 korrespondieren. Die Formteile 23, 143 können z.B. horizontal verlaufende Rillen, Zacken oder Nuten sein, die formschlüssig ineinander eingreifen können. Nach der Einführung des Schraubenkopfs oder der Schraubenmutter 93 in die Kreisöffnung 201 wird der Schraubenschaft nach unten in die Schlitzöffnung 202 geführt. An einer ausgewählten Position wird die Schraube 91 oder die Schraubenmutter 93 festgezogen, sodass die Formteile 23, 143 formschlüssig ineinander eingreifen und der Ausleger 1 in der ausgewählten Position gehalten wird. Vorzugsweise ist das Verbindungsmittel 9 an der Oberseite der Montageplatte 14 angeordnet, sodass bei Belastung des Auslegers 1 ein Drehmoment auf die Montageplatte 14 ausgeübt wird, welches die Montageplatte 14 gegen die Stütze 2 drückt und die formschlüssige Verbindung der Formteile 23, 143 sichert. Mit steigender Belastung erhöht sich daher der Kopplungsgrad zwischen den Formelementen 23, 143, weshalb der Ausleger auch bei hoher Krafteinwirkung sicher gehalten wird. Die Stütze kann daher mit wahlweise ausgestalteten Schlüssellochöffnungen 20 versehen werden, die es erlauben, den Ausleger 1 in beliebig wählbarer Höhe zu montieren.

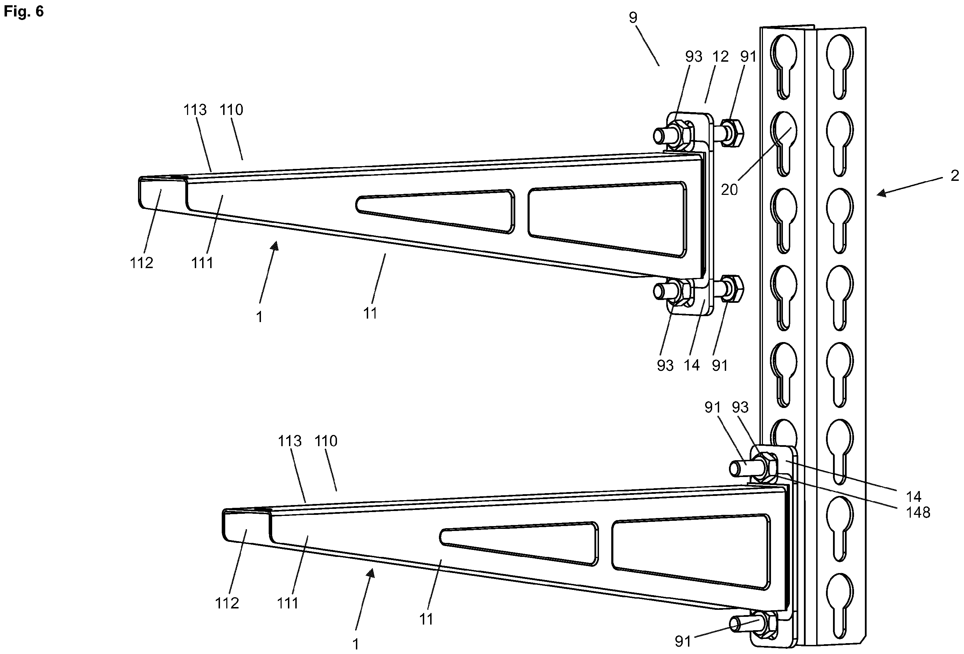

Fig. 6 zeigt Ausleger 1 in einer vorzugsweisen Ausgestaltung je mit einer Montageplatte 12, die den Tragarm 11 nach unten und nach oben mit einem Montageteil überragt. Jedes der Montageteile ist mit einem Verbindungsmittel 9 bzw. einer Schraubengarnitur 91, 93 verbunden, die in Schlüssellochöffnungen 20 der Stütze 2 eingehängt und festgezogen werden. Durch die Verwendung von Schraubengarnituren 9 oben und unten wird sichergestellt, dass der Ausleger 1 stabil gehalten und gegen die Stütze 2 gezogen wird. Sofern die Montageplatte 14 und die Stütze 2 mit zueinander korrespondierenden Formelementen versehen sind, wird durch die beidseitige Verbindung sichergestellt, dass die formschlüssige Verbindung auch bei Erschütterungen nicht gelöst wird. In dieser Ausgestaltung wird der Kopf der Montageschraube 91 in eine der Schlüssellochöffnungen 20 eingehängt.

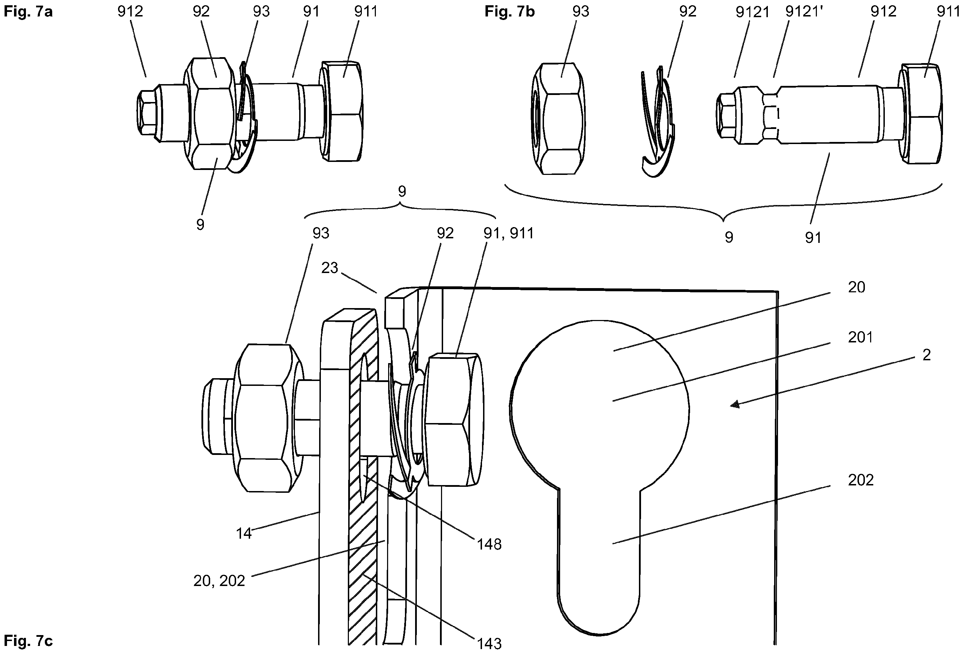

Fig. 7a zeigt das Verbindungsmittel 9 von Fig. 1 mit einer Schraube 91, einer federelastischen Unterlagscheibe 92 und einer Schraubenmutter 93.

Fig. 7b zeigt die Schraubengarnitur 9 von Fig. 7a in Explosionsdarstellung. Grundsätzlich können Montageschrauben 91 in beliebigen Ausgestaltungen verwendet werden. Fig. 7a und 7B zeigen hingegen Montageschrauben 91, deren Schaft 912 mit einem Mehrkantelement 9121, 9121' versehen ist. Das Mehrkantelement 9121, 9121' kann am stirnseitigen Ende des Schraubenschaft 912 vorgesehen sein oder darin integriert werden. Das Mehrkantelement 9121, 9121' erlaubt es, die in die Schlüssellochöffnung 20 eingehängte Montageschraube 91 gegebenenfalls mit einem Werkzeug zu halten und die Schraubenmutter kraftvoll festzuziehen, ohne dass die Montageschraube 91 mitdreht. Zum selben Zweck kann eine federelastische Unterlagscheibe 92 verwendet werden, die vorzugsweise mit den Schraubenkopf 911 verbunden ist.

Fig. 7c zeigt die Montageplatte 14 des Auslegers 1 von Fig. 1 mit der vormontierten Schraubengarnitur 9 gemäss Fig. 7a, die in eine der Schlüssellochöffnungen 20 der Stütze 2 eingeführt wurde. Die Stütze 2 ist in einem Schnitt gezeigt, der entlang der Längsachse in der Mitte durch die Schlüssellochöffnungen 20 der Wand hindurch geführt ist, die den Ausleger 1 zugewandt ist. Die Schlüssellochöffnungen 20 weisen eine Kreisöffnung 201 und eine nach unten daran anschliessende Schlitzöffnung 202 auf. Fig. 7c zeigt, dass der Schraubenkopf 911 der Montageschraube durch die Kreisöffnung 201 hindurch geführt wurde und der Schaft der Schraube 91 nun nach unten in die Schlitzöffnung 202 eingeführt werden kann, wonach die Schraubengarnitur 9 in der Schlüssellochöffnung 20 verankert ist. Nach dem Einhängen des Auslegers 1 mit der vormontierten Schraubengarnitur 9 kann dieser losgelassen oder sogar belastet werden. Die Schraubengarnitur 9 bzw. die Montageschraube 91 kann daher bequem festgezogen werden. Um diesen Vorgang zu erleichtern, ist ein elastisches Element 92 vorgesehen, welches einerseits an der Innenwand der Stütze 2 und andererseits am Schraubenkopf 911 anliegt und diesen fixiert. Die Schraubenmutter 93 wird daher automatisch gehalten, während die Schraube 91 angezogen wird. Das elastische Element 92 ist z.B., wie gezeigt, eine elastische Unterlagscheibe, die vorzugsweise mit dem Schraubenkopf 911 formschlüssig verbunden oder verklebt ist.

Das Einhängen eines Auslegers mit einem vormontierten Verbindungsmittel 9, z.B. einer Schraubengarnitur, in eine Schlüssellochöffnung einer Stütze bzw. einer Deckenstütze, kann grundsätzlich mit beliebigen Auslegern realisiert werden, die ein Kopfteil mit einer Montageöffnung aufweisen, in der das Verbindungsmittel 9 vormontierten werden kann. Ebenso kann die Verbindung des Kopfstücks 12 des Auslegers 1 und der Stütze 2 unabhängig von der konkreten Ausgestaltung des Auslegers 1 und der Stütze 2 durch Formteile 143, 23 erfolgen.

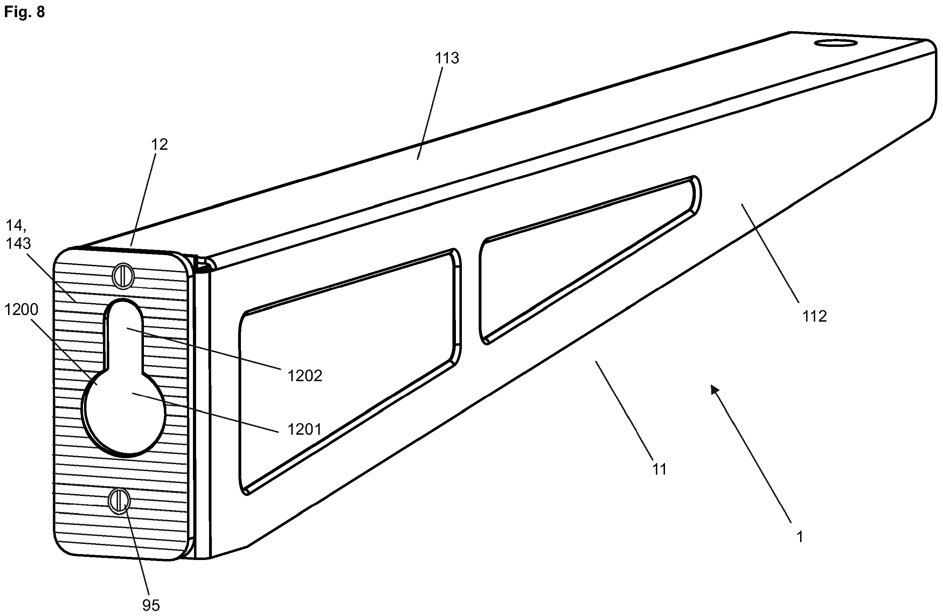

Fig. 8 zeigt, dass die Schlüssellochöffnung 1200 mit der Kreisöffnung 1201 und der Schlitzöffnung 1202 vorteilhaft auch am Kopfteil 12 des Auslegers 1 vorgesehen werden kann. Die Schlitzöffnung 1202 ragt ausgehend von der Kreisöffnung 1201 nach oben. Ein an der Stütze 2 vorgesehenes Verbindungselement 9, z.B. der Schraubenkopf 911 oder die Schraubenmutter 93 kann daher durch die Kreisöffnung 1201 der Schlüssellochöffnung 1200 hinein und mit den Schraubenschaft nach oben in die Schlitzöffnung 1202 geführt werden.

Das Kopfteil 12 bzw. die Montageplatte 14 ist vorzugsweise wieder mit Formelementen 143 versehen, die zu Formelementen 23 der Stütze korrespondieren. Eine Schlüssellochöffnung 1200 kann wiederum an jedem Kopfteil 12 eines beliebigen Auslegers 1 vorgesehen werden. Der Vorteil der erfindungsgemässen Ausleger 1 zeigt sich jedoch wiederum auch bei dieser vorzugsweisen Ausgestaltung. Aufgrund der Integration einer Schlüssellochöffnung 1200 resultiert eine Schwächung des Kopfteils 12, weshalb eine stabilere, insbesondere dickere Montageplatte 14 gewählt wird, die trotz der Schlüssellochöffnung 1200 dem Kopfteil 12 die erforderliche Festigkeit verleiht. Auch die Merkmale des Kopfteils von Fig. 4, nämlich die formschlüssige Verbindung der Endstücke 1111, 1121 mit der Montageplatte 14 können analog vorgesehen werden. Die verschiedenen Ausgestaltungen des erfindungsgemässen Auslegers 1 und der erfindungsgemässen Stütze 1, insbesondere Deckenstütze, können daher beliebig miteinander kombiniert werden.

### Literaturverzeichnis

[1] EP1155638A1
[2] EP2290772A1

## Patentansprüche

1. Ausleger (1) mit einem U-Profil-förmigen Tragarm (11), der ein erstes und ein zweites Seitenstück (111, 112) aufweist, die durch ein Mittelstück (113) einstückig miteinander verbunden sind, und der an einem Ende mit einem Kopfteil (12) verbunden ist, das durch ein Verbindungsmittel (9) mit einer Stütze (2) verbindbar ist und das gegeneinander abgewinkelte und einander überlappende Endstücke (1111, 1121) der beiden Seitenstücke (111, 112) umfasst, wobei das Kopfteil (12) eine Montageplatte (14), die nicht einstückig mit dem Tragarm (11) verbunden ist, umfasst, die eine Montageöffnung (148) aufweist, die der Aufnahme des Verbindungsmittels (9) dient, und dass die Endstücke (1111, 1121) der beiden Seitenstücke (111, 112) zwischen der Montageplatte (14) und einer Konterplatte (15), die innerhalb des U-Profils des Tragarms (11) angeordnet und nicht einstückig mit dem Tragarm (11) verbunden ist, gehalten sind, und dass die Endstücke (1111, 1121) der beiden Seitenstücke (111, 112), die Montageplatte (14) und die Konterplatte (15) durch wenigstens eine mechanische Verbindung, wie eine Tox-Verbindung, eine Schraubverbindung mit einer Schraube (95) oder eine Nietverbindung, miteinander verbunden sind.

2. Ausleger (1) nach Anspruch 1, **dadurch gekennzeichnet, dass** die wenigstens eine Schraube (95) in wenigstens eine Gewindebohrung oder Gewindeelement eingedreht ist, die in wenigstens einem der beiden Endstücke (1111, 1121) der beiden Seitenstücke (111, 112) und/oder in der Montageplatte (14) vorgesehen ist.

3. Ausleger (1) nach Anspruch 1 oder 2, **dadurch gekennzeichnet, dass** die Konterplatte (15) L-förmig ausgebildet und innerhalb des U-Profils des Tragarms (11) gegebenenfalls verschiebbar gelagert ist.

4. Ausleger (1) nach Anspruch 1, 2 oder 3, **dadurch gekennzeichnet, dass** die Montageplatte (14) und die Konterplatte (15) durch wenigstens eine Schraube (95) miteinander verbunden sind, wobei die Montageplatte (14) und/oder die Konterplatte (15) zur Aufnahme der wenigstens einen Schraube (95) vorzugsweise eine zugehörige Gewindebohrung (140, 150) aufweisen.

5. Ausleger (1) nach einem der Ansprüche 1 - 4, **dadurch gekennzeichnet, dass** das Kopfteil (12) mit einer Schlüssellochöffnung (1200) versehen ist, die mit der Schlitzöffnung (1202) nach oben ausgerichtet ist.

6. Ausleger (1) nach einem der Ansprüche 1 - 5, **dadurch gekennzeichnet, dass** die Montageplatte (14) den Tragarm (11) nach oben oder nach unten oder nach unten und nach oben mit einem Montageteil überragt, das vorzugsweise fest mit dem Verbindungsmittel (9), wie einer Montageschraube (91) und einer dazu korrespondierenden Schraubenmutter (93) und gegebenenfalls einer federelastischen Unterlagscheibe (92), verbunden ist.

7. Ausleger (1) nach einem der Ansprüche 1 - 6, **dadurch gekennzeichnet, dass** der Tragarm (11) mit dem Mittelstück (113), den Seitenstücken (111, 112) sowie den einstückig daran vorgesehenen Endstücken (1111, 1121) und/oder die Montageplatte (14) und/oder die Konterplatte (15) mit einer Schutzschicht versehen, gegebenenfalls verzinkt sind.

8. Ausleger (1) nach einem der Ansprüche 1 - 7, **dadurch gekennzeichnet, dass** die Endstücke (1111, 1121) der Seitenstücke (111, 112) und die Montageplatte (14) zueinander korrespondierende Formteile (1115, 1125; 145) aufweisen, die formschlüssig ineinander eingreifen, sodass diese senkrecht zur Achse des Tragarms (11) gegeneinander unverschiebbar gehalten sind und/oder dass die Endstücke (1111, 1121) der Seitenstücke (111, 112) und die Konterplatte (15) zueinander korrespondierende Formteile (1115, 1125; 145) aufweisen, die formschlüssig ineinander eingreifen, sodass diese senkrecht zur Achse des Tragarms (11) gegeneinander unverschiebbar gehalten sind.

9. Ausleger (1) nach einem der Ansprüche 1 - 8, **dadurch gekennzeichnet, dass** die Montageplatte (14) auf der vom Tragarm (11) abgewandten Seite mit Formteilen (143), wie Verzahnungen, versehen ist, die für den Eingriff von Formteilen (23) der Stütze (2) vorgesehen sind.

10. Montagevorrichtung (100) mit einem Ausleger (1) nach einem der Ansprüche 1-9, der durch ein Verbindungsmittel (9) mit einer Stütze (2), wie einer Deckenstütze, verbunden ist.

11. Montagevorrichtung (100) nach Anspruch 10, **dadurch gekennzeichnet, dass** die Stütze (2) wenigstens eine Schlüssellochöffnung (20) aufweist, in die ein Teil des vorzugsweise am Ausleger (1) vormontierten Verbindungsmittels (9), wie ein Schraubenkopf (911) einer Schraube (91) oder eine Schraubenmutter (93) einer Schraubengarnitur, eingehängt werden kann.

12. Montagevorrichtung (100) nach Anspruch 10 oder 11, **dadurch gekennzeichnet, dass** die Schraubengarnitur (9) ein elastisches Element (92), wie eine federelastische Unterlagscheibe, umfasst, mittels dessen ein Teil der Schraubengarnitur (9) fixierbar ist und/oder dass die Schraubengarnitur (9) eine Schraube (91) mit einem Schraubenkopf (911) und einem Schraubenschaft (912) umfasst, der mit einem Mehrkantelement (9121, 9121') versehen ist, das Mittel seines Werkzeugs gehalten werden kann.

13. Montagevorrichtung (100) nach Anspruch 10, 11 oder 12, **dadurch gekennzeichnet, dass** die Montageplatte (14) auf der vom Tragarm (11) abgewandten Seite mit Formteilen (143), wie Verzahnungen, versehen ist, die in Formteile (23) eingreifen, die an der Stütze (2) vorgesehen sind.

14. Montagevorrichtung (100) nach Anspruch 13, **dadurch gekennzeichnet, dass** die wenigstens eine Schlüssellochöffnung (20) oder wenigstens eine der Schlüssellochöffnungen (20) einen verlängerten Längsschlitz (202) aufweist, entlang dem das Verbindungsmittel (2) an einer beliebigen Stelle derart fixierbar ist, dass die Formteile (23, 143) formschlüssig ineinander eingreifen.

## Claims

1. Bracket (1) with a U-shaped support arm (11), which comprises a first and a second side piece (111, 112) that are integrally connected to each other by a middle piece (113), and which is connected at one end to a head piece (12), which is connectable to a support (2) by a connecting means (9) and which comprises mutually angled and mutually overlapping end pieces (1111, 1121) of the two side pieces (111, 112), wherein the head piece (12) comprises a mounting plate (14), which is not integrally connected to the support arm (11), which has a mounting opening (148), for receiving the connecting means (9), and that the end pieces (1111, 1121) of the two side pieces (111, 112) are held between the mounting plate (14) and a counter plate (15) which is arranged inside the U-profile of the support arm (11) and is not integrally connected to the support arm (11), and that the end pieces (1111, 1121) of the two side pieces (111, 112), the mounting plate (14) and the counter plate (15) are connected to each other by at least one mechanical connection, such as a tox connection, a screw connection with a screw (95) or a riveted connection.

2. Bracket (1) according to claim 1, **characterised in that** the at least one screw (95) is screwed into at least one threaded hole or threaded element provided in at least one of the two end pieces (1111, 1121) of the two side pieces (111, 112) and/or in the mounting plate (14).

3. Bracket (1) according to claim 1 or 2, **characterised in that** the counter plate (15) is L-shaped and is supported, if appropriate displaceable, within the U-profile of the support arm (11).

4. Bracket (1) according to claim 1, 2 or 3, **characterised in that** the mounting plate (14) and the counter plate (15) are connected to one another by at least one screw (95), wherein the mounting plate (14) and/or the counter plate (15) preferably have an associated threaded bore (140, 150) for receiving the at least one screw (95).

5. Bracket (1) according to one of the claims 1 - 4, **characterised in that** the head piece (12) is provided with a keyhole opening (1200) which is aligned with the slot opening (1202) upwards.

6. Bracket (1) according to one of the claims 1 - 5, **characterised in that** the mounting plate (14) extends upwards or downwards or downwards and upwards beyond the support arm (11) with a mounting part which is preferably firmly connected to the connecting means (9), such as a mounting screw (91) and a corresponding screw nut (93) and possibly a spring-elastic washer (92).

7. Bracket (1) according to one of the claims 1 - 6, **characterised in that** the support arm (11) with the middle piece (113), the side pieces (111, 112) as well as the end pieces (1111, 1121) provided integrally thereon and/or the mounting plate (14) and/or the counter plate (15) are provided with a protective coating, optionally galvanised.

8. Bracket (1) according to one of the claims 1 - 7, **characterised in that** the end pieces (1111, 1121) of the side pieces (111, 112) and the mounting plate (14) comprise mutually corresponding shaped parts (1115, 1125; 145) which engage positively in one another, so that they are held perpendicularly to the axis of the supporting arm (11) such that they cannot be displaced with respect to one another and/or **in that** the end pieces (1111, 1121) of the side pieces (111, 112) and the counter plate (15) have mutually corresponding shaped parts (1115, 1125; 145) which engage positively in one another, so that they are held perpendicularly to the axis of the supporting arm (11) such that they cannot be displaced with respect to one another.

9. Bracket (1) according to one of the claims 1 - 8, **characterised in that** the mounting plate (14) is provided on the side facing away from the support arm (11) with shaped parts (143), such as serrations, which are provided for the engagement of shaped parts (23) of the support (2).

10. Mounting device (100) with a bracket (1) according to one of the claims 1-9, which is connected by connecting means (9) to a support (2), such as a ceiling support.

11. Mounting device (100) according to claim 10, **characterised in that** the support (2) has at least one keyhole opening (20) into which a part of the connecting means (9), which is preferably preassembled on the bracket (1), such as a screw head (911) of a screw (91) or a screw nut (93) of a screw set, can be hooked.

12. Mounting device (100) according to claim 10 or 11, **characterised in that** the screw set (9) comprises an elastic element (92), such as a spring-elastic washer, by means of which a part of the screw set (9) is fixable and/or that the screw set (9) comprises a screw (91) with a screw head (911) and a screw shaft (912) which is provided with a multi-edge element (9121, 9121') which can be held by means of its tool.

13. Mounting device (100) according to claim 10, 11 or 12, **characterised in that** the mounting plate (14) is provided on the side facing away from the support arm (11) with shaped parts (143), such as serrations, which engage in shaped parts (23) provided on the support (2).

14. Mounting device (100) according to claim 13, **characterised in that** the at least one keyhole opening (20) or at least one of the keyhole openings (20) has an elongated longitudinal slot (202) along which the connecting means (2) can be fixed at any desired point in such a way that the shaped parts (23, 143) engage positively in one another.

## Revendications

1. Console (1) avec un bras de support en forme de U (11), qui comprend une première et une deuxième pièce latérale (111, 112) qui sont intégralement reliées l'une à l'autre par une pièce centrale (113), et qui est reliée à une extrémité à une pièce de tête (12), qui peut être reliée à un support (2) par un moyen de liaison (9) et qui comprend des pièces d'extrémité (1111, 1121) des deux pièces latérales (111, 112) qui sont inclinées l'une par rapport à l'autre et qui se recouvrent l'une l'autre, la pièce de tête (12) comprenant une plaque de montage (14) qui n'est pas reliée intégralement au bras de support (11) et qui présente une ouverture de montage (148), pour recevoir les moyens de connexion (9), et que les pièces d'extrémité (1111, 1121) des deux pièces latérales (111, 112) sont maintenues entre la plaque de montage (14) et une contre-plaque (15) qui est disposée à l'intérieur du profilé en U du bras de support (11) et n'est pas reliée d'un seul tenant au bras de support (11), et que les pièces d'extrémité (1111, 1121) des deux pièces latérales (111, 112), la plaque de montage (14) et la contre-plaque (15) sont reliées entre elles par au moins une liaison mécanique, telle qu'une liaison tox, une liaison vissée avec une vis (95) ou une liaison rivetée.

2. Console (1) selon la revendication 1, **caractérisé en ce que** la au moins une vis (95) est vissée dans au moins un trou fileté ou un élément fileté prévu dans au moins une des deux pièces d'extrémité (1111, 1121) des deux pièces latérales (111, 112) et/ou dans la plaque de montage (14).

3. Console (1) selon la revendication 1 ou 2, **caractérisé en ce que** la contre-plaque (15) est en forme de L et est supportée, éventuellement déplaçable, à l'intérieur du profil en U du bras de support (11).

4. Console (1) selon la revendication 1, 2 ou 3, **caractérisé en ce que** la plaque de montage (14) et la contre-plaque (15) sont reliées l'une à l'autre par au moins une vis (95), la plaque de montage (14) et/ou la contre-plaque (15) présentant de préférence un alésage fileté associé (140, 150) pour recevoir la au moins une vis (95).

5. Console (1) selon une des revendications 1 - 4, **caractérisé en ce que** la pièce de tête (12) est pourvue d'une ouverture en trou de serrure (1200) qui est alignée avec l'ouverture en fente (1202) vers le haut.

6. Console (1) selon une des revendications 1 - 5, **caractérisé en ce que** la plaque de montage (14) surpasse le bras de support (11) vers le haut ou vers le bas ou vers le bas et vers le haut avec une pièce de montage qui est de préférence fermement reliée au moyen de connexion (9), telle qu'une vis de montage (91) et un écrou correspondant (93) et, si nécessaire, une rondelle élastique (92).

7. Console (1) selon une des revendications 1 - 6, **caractérisé en ce que** der Tragarm (11) mit dem Mittelstück (113), den Seitenstücken (111, 112) sowie den einstückig daran vorgesehenen Endstücken (1111, 1121) et/ou die Montageplatte (14) et/ou die Konterplatte (15) mit einer Schutzschicht versehen, gegebenenfalls verzinkt sind.

8. Console (1) selon une des revendications 1 - 7, **caractérisé en ce que** les pièces d'extrémité (1111, 1121) des pièces latérales (111, 112) et la plaque de montage (14) comprennent des pièces de forme (1115, 1125 ; 145) qui s'engagent positivement l'une dans l'autre, de sorte qu'elles sont maintenues perpendiculairement à l'axe du bras de support (11) de sorte qu'elles ne peuvent pas être déplacées l'une par rapport à l'autre et/ou **en ce que** les pièces d'extrémité (1111, 1121) des pièces latérales (111, 112) et la contre-plaque (15) ont des pièces de forme mutuellement correspondantes (1115, 1125 ; 145) qui s'engagent positivement l'une dans l'autre, de sorte qu'elles sont maintenues perpendiculairement à l'axe du bras de support (11) de sorte qu'elles ne peuvent pas être déplacées l'une par rapport à l'autre.

9. Console (1) selon une des revendications 1 - 8, **caractérisé en ce que** la plaque de montage (14) est pourvue, sur le côté opposé au bras de support (11), de parties profilées (143), telles que des dentelures, qui sont prévues pour l'engagement de parties profilées (23) du support (2).

10. Dispositif de montage (100) comprenant une console (1) selon une des revendications 1-9 reliée par un moyen de liaison (9) à un support (2) tel qu'un support de plafond.

11. Dispositif de montage (100) selon la revendication 10, **caractérisé en ce que** le support (2) présente au moins une ouverture en trou de serrure (20) dans laquelle peut être accrochée une partie du moyen de liaison (9), de préférence prémonté sur le support (1), tel qu'une tête de vis (911) d'une vis (91) ou un écrou (93).

12. Dispositif de montage (100) selon la revendication 10 ou 11, **caractérisé en ce que** le set de vis (9) comprend un élément élastique (92), tel qu'une rondelle élastique, au moyen duquel une partie du set de vis (9) peut être fixée et/ou **en ce que** le set de vis (9) comprend une vis (91) avec une tête de vis (911) et une tige de vis (912) qui est pourvue d'un élément à arêtes multiples (9121, 9121') qui peut être maintenu au moyen de son outil.

13. Dispositif de montage (100) selon la revendication 10, 11 ou 12, **caractérisé en ce que** la plaque de montage (14), sur le côté opposé au bras de support (11), est pourvue de pièces façonnées (143), telles que des dentelures, qui s'engagent dans des parties profilées (23) prévues sur le support (2).

14. Dispositif de montage (100) selon la revendication 13, **caractérisé en ce que** l'au moins une ouverture en forme de trou de serrure (20) ou au moins l'une des ouvertures en forme de trou de serrure (20) présente une fente longitudinale allongée (202) le long de laquelle le moyen de liaison (2) peut être fixé à un endroit souhaité de telle sorte que les parties profilées (23, 143) s'engagent par complémentarité de forme l'une dans l'autre.
